# NOUVEAU FASCICULE DE BREVET EUROPEEN

(11) **EP 1 288 065 B2**
(45) Date de publication et mention de la décision concernant l'opposition: **24.08.2011**
(45) Mention de la délivrance du brevet: 19.05.2004
(21) Numéro de dépôt: 02102163.9
(22) Date de dépôt: 19.08.2002
(51) Int. Cl.: B60P 1/20, B60P 1/28, B62D 21/02

(54) **Benne basculante.**
Kipperaufbau
Tilting body

(30) Priorité: 27.08.2001 EP 01870185
(43) Date de publication de la demande: 05.03.2003
(73) Titulaire: Victoria Administration Limited, The Broadway, London NW73TB (GB)
(72) Inventeur: De Kock, Hugo, 3090 Overijse (BE)
(74) Mandataire: Van Straaten, Joop

(56) Documents cités:
- EP-A- 0 939 021
- EP-A1- 0 374 336
- EP-A1- 0 408 744
- EP-B1- 0 733 511
- DD-A- 60 494
- DE-U- 20 103 358
- FR-A- 1 444 886
- FR-A- 2 702 441
- FR-A1- 2 595 302
- GB-A- 821 016
- GB-A- 992 066
- US-A- 5 090 773
- US-A- 5 090 773
- US-A1- 5 836 657

## Description

L'invention concerne les bennes basculantes hémicylindriques ainsi que les véhicules ou leurs remorques dotées de telles bennes, selon les caractéristiques du préambule de la revendication indépendante.

On appelle hémicylindriques ou « en baignoire » les bennes auto-portantes dont la section transversale, généralement formée d'une alternance de droites ou d'arcs et d'arêtes, s'inscrit en substance dans un demi-cercle.

On connaît notamment par DDR-60494 des camions à bennes basculantes hémicylindriques. Ce type de benne connaît un regain de popularité depuis qu'il a été associé à des châssis légers en berceaux tels que décrits dans EP-0 374 336. En effet, ces bennes permettent notamment une bonne répartition des charges voyageant en vrac. En outre, leur structure étant auto-portante, elles ne nécessitent normalement pas de longerons inférieurs de renfort et elles sont donc plus légères que des bennes classiques.

Il se pose cependant avec les bennes munies de châssis en berceau un problème de durabilité. Les tôles dont elles sont constituées, même cintrées, ont en elles-mêmes peu de résistance à la flexion. Faute d'un autre emplacement adéquat, les constructeurs n'ont donc pas d'autre possibilité que de fixer le système de levage de la benne à son extrémité frontale. En conséquence, la course à laquelle est astreint le système de levage est extrêmement longue, ce qui impose de faire appel à un vérin télescopique.

Outre le fait qu'il consomme une quantité de fluide hydraulique important, ce vérin est cher, très lent, présente rapidement une usure importante et confère une instabilité dangereuse au véhicule.

Les dispositifs de levage des bennes basculantes de ce type sont en effet très vulnérables. Si l'assiette de la remorque n'est pas parfaite, ils subissent des effets de torsion voire de flambage importants lorsqu'ils sont en extension. Ils sont de même à la merci de sollicitations latérales (chocs, poussées dues au vent, etc.), or un châssis en berceau est plus sensible qu'un châssis classique aux problèmes de torsion. Par ailleurs, vu la lenteur de l'opération de bennage, il n'est pas rare de voir les conducteurs faire démarrer leur camion alors que la benne n'a pas encore regagné complètement sa nacelle, ce qui accroît encore les sollicitations anormales sur un mécanisme déjà sensible.

Parmi les autres systèmes de levage, on connaît le système à compas tel que décrit dans GB 992 066. Ce document décrit un compas où le vérin est inséré entre les branches du compas. Celui-ci produit un effort essentiellement perpendiculaire à la benne, dont la structure est renforcée par des forts longerons et n'est donc pas auto-portante. Cette structure est donc, de surcroît, fort lourde.

GB 821 016 qui est considéré comme l'état le plus proche de la technique, décrit un véhicule où le compas est inversé par rapport au document précédent mais où, également, l'effort transmis par le compas est appliqué perpendiculairement à la benne, à des longerons qui en rigidifient la structure.

Une benne hémicylindrique auto-portante ne supporterait pas les sollicitations engendrées par ces deux types de mécanismes.

On a cherché à remédier à ces inconvénients sans pour autant accroître la tare de ce type de bennes, et en évitant en conséquence l'usage de longerons raidisseurs.

L'objet de l'invention est un dispositif basculant pour véhicules routiers comprenant un châssis fixe, une benne basculante et un système de levage à structure en compas. Dans ce dispositif, comme connu de FR-2 595 302, fig. 1, les extrémités libres de la structure en compas sont solidarisées à pivotement, respectivement au châssis et à la partie inférieure dé la benne, au moins un vérin étant disposé entre les branches de ce compas, respectivement près de l'articulation du compas et à la partie inférieure de la benne hémicylindrique et exercant sur la dite benne, lors du levage, une contrainte en élongation, le problème est résolu en ce que
- la benne basculante est une structure hémicylindrique autoportante et le compas est disposé vers le milieu de la benne.

La branche supérieure du compas est, de préférence, fixée à la benne par l'intermédiaire d'une semelle de répartition de charge.

L'avantage du système de levage du dispositif basculant de l'invention est qu'il devient pratiquement insensible aux sollicitations latérales extérieures : la structure du compas formée exclusivement d'éléments mécaniques rigides permet de reprendre sans effort toutes les sollicitations exercées sur le châssis ou sur la benne.

Un autre avantage est que le ou les vérins utilisés n'ont besoin que d'une faible course (de l'ordre du mètre), qu'ils consomment une quantité réduite de fluide hydraulique et qu'ils ne subissent que des contraintes axiales. Outre leur usure réduite, ces vérins sont des modèles aux caractéristiques standards, relativement économiques et, surtout, généralement disponibles de stock.

Un autre avantage est que l'opération de bennage est très rapide, et qu'il est même possible à l'opérateur de secouer la benne pour en détacher les reliquats des matériaux déversés (opération impossible à réaliser avec un système de levage à vérin télescopique).

Cet au moins un vérin est généralement à simple effet, mais on peut avantageusement prévoir un ou des vérins à double effet, ce qui permet de mieux contrôler la descente de la benne.

Le dispositif de l'invention s'applique aussi bien à des camions à bennes qu'à des remorques ou des semi-remorques.

Ce châssis fixe est, suivant un exemple avantageux, constitué essentiellement de longerons et de traverses reliés entre eux par des tôles cintrées formant des assemblages en pattes d'éléphant.

Il est donc à la fois allégé et renforcé par rapport à un châssis à longerons classique.

De préférence, les tôles cintrées présentent des découpes permettant la soudure en surface de ces tôles aux traverses et longerons.

Il va de soi que d'autres modes d'allègement et de renforcement peuvent être appliqués, tels que l'usage de structures en treillis ou de tôles de rigidification.

L'invention a également pour objet un véhicule routier et une remorque pour véhicule routier qui comprennent un dispositif basculant comme décrit ci-dessus.

D'autres particularités ou avantages de l'invention ressortiront de la description ci-après de formes de réalisation particulières, référence étant faite aux dessins annexés, dans lesquels :
La Fig. 1 est une vue schématique en perspective d'un camion semi-remorque qui ne fAIt pas partie de l'invention.
La Fig. 2 est une vue schématique en plan d'un détail du châssis de la semi-remorque de la Fig. 1.
La Fig. 3 est une vue schématique comparable à la Fig. 1 du mode de réalisation du dispositif de l'invention.

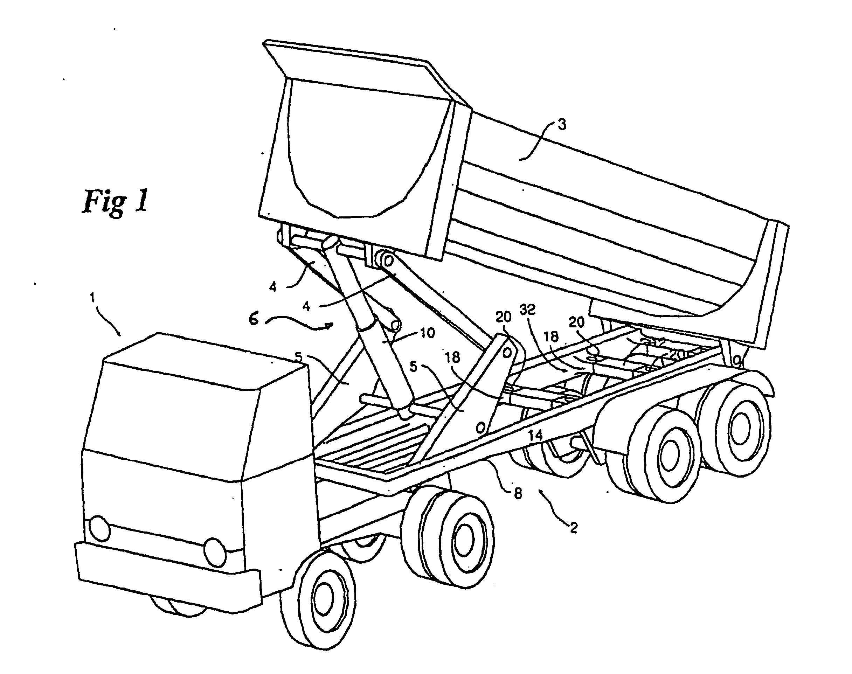

Le tracteur classique 1 montré à la Fig. 1 entraîne une semi-remorque 2 munie d'une benne hémicylindrique 3 classique quant à sa forme générale.

Cependant, la partie avant de la benne 3 est soutenue non pas par un vérin télescopique classique, mais par les jambes 4 d'une structure en compas 6. Les autres jambes 5 du compas 6 sont fixées vers l'avant du châssis 8 de la semi-remorque 2.

Un vérin 10 est monté entre les jambes 4, 5 du compas 6. Cependant, à la différence d'un montage en compas classique, une des extrémités du vérin 10 est ancrée à la base des jambes 4. Lorsque le conducteur du camion doit basculer la benne 3, il injecte un fluide hydraulique dans le vérin 10, provoquant à la fois le déploiement du compas 6 et l'application sur la benne d'une force avec une composante longitudinale importante, tendant à l'élongation de sa structure.

Au repos, le compas 6 est complètement replié et ne fait pas saillie par rapport au châssis de la semi-remorque 2.

L'utilisation d'un compas 6 pourrait constituer dans le cas présent une solution a priori absurde pour l'homme du métier. En effet, un compas est une structure extrêmement lourde (de l'ordre d'une tonne), qui augmente considérablement la tare d'un camion et réduit en conséquence les capacités de chargement d'un camion ou d'une remorque qui en seraient équipés. En outre, un compas est encombrant : il est impossible de l'intégrer tant dans un châssis allégé comme décrit dans EP- 0 374 336 que dans un châssis à longerons classique.

Le poids supplémentaire apporté par la présence du compas 6 est compensé par la possibilité qu'il offre de manipuler en toute sécurité la benne hémisphérique auto-portante, malgré l'absence de tout longeron de renfort. En outre, le vérin 10 est plus léger et les jambes 4 du compas, agissant davantage comme des biellettes que comme des organes de transmission de force, ne subissent que peu d'effort et peuvent être de construction relativement légère. Enfin, on peut compenser le poids additionnel du compas notamment par un allègement du châssis, de façon à maintenir la tare à un niveau économiquement raisonnable.

Une façon d'obtenir un châssis allégé est d'en renforcer la rigidité, ce qui permet de réduire de poids des tôles et des profilés utilisés.

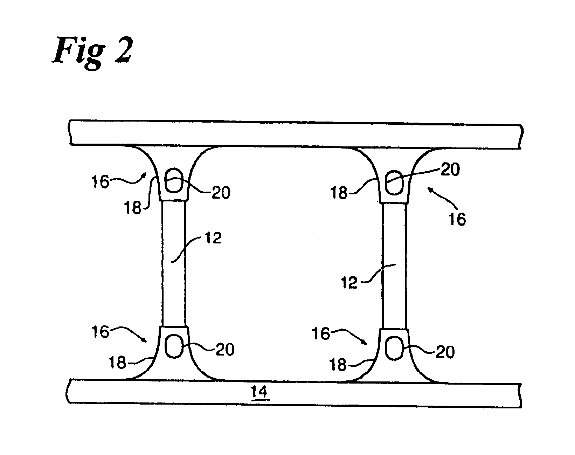

Un tel châssis à rigidité renforcée est représenté succinctement à la Fig. 2. Il comprend deux longerons 14 et des entretoises 12. Selon l'invention, les entretoises 12 sont reliées aux longerons 14 par un raccordement en pattes d'éléphant 16. Une tôle cintrée 18 est placée en congé à chaque angle de raccord entre entretoise 12 et longerons 14, élargissant leur assise mutuelle. En outre, une ouverture 20 ménagée dans chaque tôle cintrée permet la pose d'un cordon de soudure en surface, particulièrement résistant à l'arrachement.

Cette conception permet, à capacité équivalente, d'atteindre globalement une tare inférieure à celle d'une remorque à châssis en berceau, et ce malgré le poids supplémentaire dû au compas 6.

L'espacement entre les longerons 14 du châssis 8 de la benne de l'invention est élargi, ce qui permet une insertion plus aisée du compas 6 et confère également une bien plus grande stabilité à la remorque 2, d'où un moindre danger de renversement.

On notera aussi que le compas 6 exerce au levage une poussée à la fois par le bas et en élongation sur la benne 3, ce qui entraîne paradoxalement moins de problème de déformation que la traction du vérin télescopique classique sur l'avant d'une benne hémicylindrique. Par ailleurs, il est évident que l'on peut opter pour des bennes hémicylindriques autoportantes de différentes sections transversales sans sortir du cadre de l'invention .

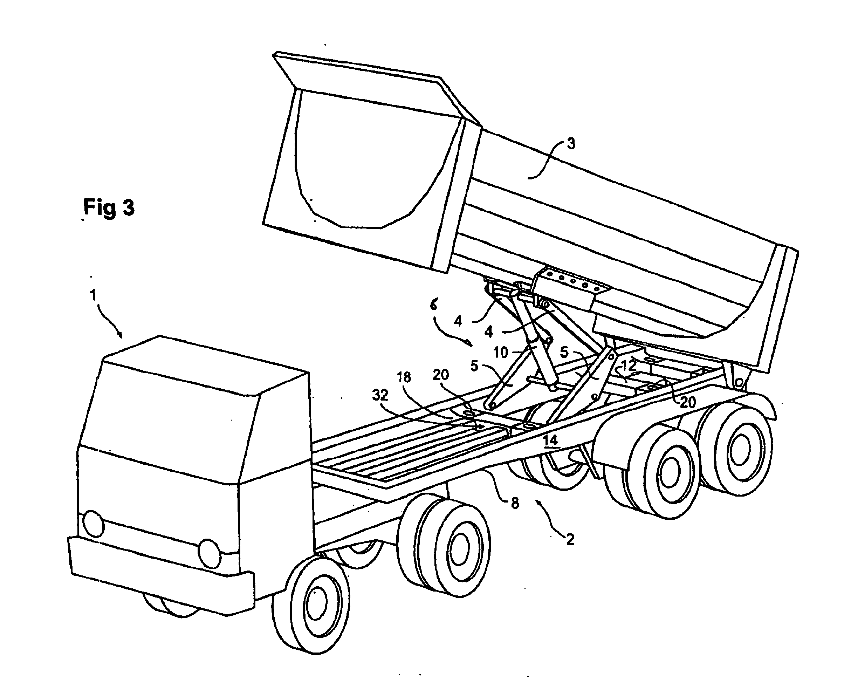

Bien que un dispositif ait été représenté à la Fig.1 avec la branche supérieure du compas raccordée près de l'avant de la benne basculante autoportante, dans le dispositif selon l'invention, comme représenté à la Fig. 3, le compas est disposé plutôt vers le milieu de la benne, sur laquelle il prend appui via une semelle de répartition des sollicitations locales.

Un avantage de l'invention est que si, contre toute attente, l'équilibre de la benne venait à être perturbé durant le versage, le conducteur peut enclencher un repli quasi-instantané du compas, évitant ainsi le renversement de la remorque 2 ou du camion, ce qui est impossible avec une benne hémicylindrique à levage classique.

Il va de soi que le dispositif de l'invention s'applique aussi bien à des remorques ou à des semi-remorques à benne basculante, comme représenté à la Fig. 1, qu'à des camions à benne.

Le vérin 10 peut être à simple effet (la benne revenant à l'horizontal de par son propre poids) ou à double effet.

## Revendications

1. Dispositif basculant pour véhicules routiers comprenant un châssis fixe (8), une benne basculante (3) et un système de levage (6) à structure en compas - les extrémités libres de la structure en compas (6) étant solidarisées à pivotement, respectivement au châssis (8) et à la partie inférieure de la benne (3), au moins un vérin (10) étant disposé entre les branches (4,5) de ce compas, respectivement près de l'articulation du compas et de la partie inférieure de la benne (3) et exerçant sur la dite benne, lors du levage, une contrainte en élongation le dispositif étant **caractérisé en ce que**
- la benne basculante (3), est une structure hémicylindrique autoportante ; et le compas est disposé vers le milieu de la benne.

2. Dispositif basculant pour véhicules routiers suivant la revendication 1 **caractérisé en ce que** la branche supérieure du compas est fixée à la benne par l'intermédiaire d'une semelle de répartition de charge.

3. Dispositif basculant pour véhicules routiers suivant l'une quelconque des revendications 1 et 2 **caractérisé en ce que** cet au moins un vérin (10) est à double effet.

4. Dispositif basculant pour véhicules routiers suivant l'une quelconque des revendications précédentes **caractérisé en ce que** le châssis fixe (8) est constitué essentiellement de longerons (14) et de traverses (12) reliés entre eux par des tôles cintrées (18) formant des assemblages en pattes d'éléphant (16).

5. Dispositif basculant pour véhicules routiers suivant la revendication 4 **caractérisé en ce que** les tôles cintrées (18) présentent des découpes (20) permettant la soudure en surface de ces tôles (18) aux traverses (12) et longerons (14).

6. Dispositif basculant pour véhicule routier suivant l'une quelconque des revendications 1 à 3 **caractérisé en ce que** le chassis fixe (8) comprend des structures en treillis.

7. Dispositif basculant pour véhicules routiers suivant l'une quelconque des revendications 1 à 6 **caractérisé en ce que** le châssis fixe (8) est le châssis arrière d'un véhicule automoteur.

8. Véhicule routier **caractérisé en ce qu'**il comprend un dispositif basculant suivant la revendication 7.

9. Dispositif basculant pour véhicules routiers suivant l'une quelconque des revendications 1 à 6 **caractérisé en ce que** le châssis fixe (8) est le châssis d'une remorque ou d'une semi-remorque (2).

10. Remorque pour véhicule routier **caractérisée en ce qu'**elle comprend un dispositif basculant suivant la revendication 9.

## Claims

1. Tilting device for road vehicles, comprising a fixed chassis (8), a tilting body (3) and a lifting system (6) having a compass-type structure, the free ends of the compass-type structure (6) being secured pivotably to the chassis (8) and to the lower part of the body (3) respectively, at least one jack (10) being arranged between the branches (4, 5) of this compass, respectively near the articulation of the compass and near the lower part of the semi-cylindrical body (3), and exerting an elongation stress on the said body during the lifting operation,
**characterized in that**
- the tilting body (3) is a self-supporting semi-cylindrical structure,
- the compass is arranged towards the middle of the tilting body.

2. Tilting device for road vehicles according to Claim 1, **characterized in that** the upper branch of the compass is fastened to the body by means of a load distribution sole piece.

3. Tilting device for road vehicles according to either one of Claims 1 and 2, **characterized in that** this at least one jack (10) is of the double-acting type.

4. Tilting device for road vehicles according to any one of the preceding claims, **characterized in that** the fixed chassis (8) consists essentially of side members (14) and of crossmembers (12) connected to one another by means of bent panels (18) constituting assemblies in the form of elephant's feet (16).

5. Tilting device for road vehicles according to Claim 4, **characterized in that** the bent panels (18) have cutouts (20) making it possible for these panels (18) to be welded to the surface of the crossmembers (12) and side members (14).

6. Tilting device for road vehicles according to any one of Claims 1 to 3, **characterized in that** the fixed chassis (8) comprises lattice-type structures.

7. Tilting device for road vehicles according to any one of Claims 1 to 6, **characterized in that** the fixed chassis (8) is the rear chassis of an automotive vehicle.

8. Road vehicle, **characterized in that** it comprises a tilting device according to Claim 7.

9. Tilting device for road vehicles according to any one of Claims 1 to 6, **characterized in that** the fixed chassis (8) is the chassis of a trailer or of a semitrailer (2).

10. Trailer for a road vehicle, **characterized in that** it comprises a tilting device according to Claim 9.

## Patentansprüche

1. Kippvorrichtung für Straßenfahrzeuge, die ein stationäres Chassis (8), einen Kipper (3) und ein Hubsystem (6) mit Scherenstruktur umfassen, wobei die freien Enden des Scherenaufbaus (6) kippend mit dem Chassis (8) bzw. dem unteren Teil des Kippers (3) fest verbunden sind, wobei zwischen den Armen (4, 5) dieser Schere mindestens ein Zylinder (10), in der Nähe des Scherengelenks bzw. des unteren Teils des halbzylindrischen Kippers (3) angeordnet ist und auf den Kipper beim Hub eine Dehnungsspannung ausübt **dadurch gekennzeichnet dass**
- der Kipper (3) ein selbsttragender halbzylindrischer Aufbau ist,
- die Schere ist zur Mitte des Kippers hin angeordnet.

2. Kippvorrichtung für Straßenfahrzeuge nach Anspruch 1, **dadurch gekennzeichnet, dass** der obere Arm der Schere am Kipper über eine Lastverteilungssohle befestigt ist.

3. Kippvorrichtung für Straßenfahrzeuge nach Anspruch 1 oder 2, **dadurch gekennzeichnet, dass** dieser mindestens eine Zylinder (10) doppeltwirkend ist.

4. Kippvorrichtung für Straßenfahrzeuge nach einem der vorhergehenden Ansprüche, **dadurch gekennzeichnet, dass** das stationäre Chassis (8) im Wesentlichen aus Längsbalken (14) und Querbalken (12) besteht, die untereinander durch gebogene Bleche (18) verbunden sind, die Elefantenbeingefüge (16) bilden.

5. Kippvorrichtung für Straßenfahrzeuge nach Anspruch 4, **dadurch gekennzeichnet, dass** die gebogenen Bleche (18) Ausschnitte (20) aufweisen, die das Schweißen auf der Oberfläche dieser Bleche (18) an die Querbalken (12) und Längsbalken (14) erlauben.

6. Kippvorrichtung für Straßenfahrzeuge nach einem der Ansprüche 1 bis 3, **dadurch gekennzeichnet, dass** das stationäre Chassis (8) Gitterstrukturen umfasst.

7. Kippvorrichtung für Straßenfahrzeuge nach einem der Ansprüche 1 bis 6, **dadurch gekennzeichnet, dass** das stationäre Chassis (8) das Heckchassis eines selbstfahrenden Fahrzeugs ist.

8. Straßenfahrzeug, **dadurch gekennzeichnet, dass** es eine Kippvorrichtung nach Anspruch 7 umfasst.

9. Kippvorrichtung für Straßenfahrzeuge nach einem der Ansprüche 1 bis 6, **dadurch gekennzeichnet, dass** das stationäre Chassis (8) das Chassis eines Anhängers oder Sattelschleppers (2) ist.

10. Anhänger für Straßenfahrzeug, **dadurch gekennzeichnet, dass** er eine Kippvorrichtung nach Anspruch 9 umfasst.
